Europäisches Patentamt

European Patent Office

Office européen des brevets

(19)

(11) Numéro de publication : **0 219 520 B1**

(12) **FASCICULE DE BREVET EUROPÉEN**

(45) Date de publication du fascicule du brevet :
**11.01.89**

(21) Numéro de dépôt : **86902420.8**

(22) Date de dépôt : **15.04.86**

(86) Numéro de dépôt international :
**PCT/FR 86/00125**

(87) Numéro de publication internationale :
**WO/8606051 (23.10.86 Gazette 86/23)**

(51) Int. Cl.⁴ : **B 65 G 49/08, F 26 B 5/06**

(54) CHARIOT DE TRANSFERT DE PLATEAUX, NOTAMMENT POUR LYOPHILISATEUR, ET INSTALLATION DE CHARGE-MENT/DECHARGEMENT CORRESPONDANTE.

(30) Priorité : **18.04.85 FR 8505873**

(43) Date de publication de la demande :
**29.04.87 Bulletin 87/18**

(45) Mention de la délivrance du brevet :
**11.01.89 Bulletin 89/02**

(84) Etats contractants désignés :
**AT BE CH DE FR GB IT LI LU NL SE**

(56) Documents cités :
**EP--A-- 0 099 834**
**CH--A-- 424 592**
**DE--A-- 2 510 028**
**FR--A-- 2 539 003**

(73) Titulaire : **SOCIETE D'UTILISATION SCIENTIFIQUE ET INDUSTRIELLE DU FROID USIFROID (Procédés Rieutord)**
**Rue Claude Bernard Boîte Postale no 123**
**F-78312 Maurepas Cédex (FR)**

(72) Inventeur : **BARON, Michel**
**26, rue de la Ferronnerie**
**F-78370 Plaisir (FR)**
Inventeur : **LAMBERT, Claude**
**23, rue du Lac**
**F-78480 Verneuil-sur-Seine (FR)**
Inventeur : **LE FLOCH, Louis**
**5, sente de la Concorde**
**F-92380 Garches (FR)**

(74) Mandataire : **Jacobson, Claude et al**
**L'AIR LIQUIDE, SOCIETE ANONYME POUR L'ETUDE ET L'EXPLOITATION DES PROCEDES GEORGES CLAUDE 75, quai d'Orsay**
**F-75321 Paris Cédex 07 (FR)**

Jouve, 18, rue St-Denis, 75001 Paris, France

**Description**

La présente invention concerne un chariot et une installation de transfert de plateaux pour leur chargement automatique sur les étagères d'un appareil de traitement ou leur déchargement à partir de ces étagères.

Dans de nombreux domaines industriels il est nécessaire de placer, sur les étagères superposées d'un appareil de traitement, des plateaux portant divers produits devant subir le traitement considéré. Tel est par exemple le cas de flacons contenant des produits devant être lyophilisés.

L'invention a pour but de fournir un équipement permettant de charger et de décharger automatiquement un lyophilisateur tout en permettant une souplesse maximale d'utilisation de cet appareil.

A cet effet, l'invention a pour objet un chariot de transfert de plateaux sur des étagères d'un appareil de traitement, du type comprenant un bâti déplaçable portant des supports de plateaux à différents étages correspondant auxdites étagères et des moyens d'entraînement pour déplacer longitudinalement les plateaux par rapport à leurs supports (voir E P-A-99834), caractérisé en ce que lesdits moyens d'entraînement comprennent des moyens de sélection pour permettre de déplacer simultanément les plateaux de tous les étages du chariot ou de seulement certains d'entre eux.

L'invention a également pour objet une installation de chargement et de déchargement d'un appareil de traitement à étagères multiples, caractérisée en ce qu'elle comprend : au moins un convoyeur d'amenée et/ou d'évacuation de plateaux ; un chariot de transfert tel que défini ci-dessus ; et, à l'extrémité du ou de chaque convoyeur, un portique de chargement et/ou déchargement comportant une plate-forme de transfert mobile verticalement sur un bâti fixe, des moyens pour commander le déplacement vertical de cette plate-forme et l'arrêt à un niveau prédéterminé parmi plusieurs niveaux correspondant respectivement à ceux des étagères de l'appareil de traitement, et des moyens pour transférer les plateaux de la plate-forme de transfert sur chaque étage du chariot et vice-versa.

On décrira ci-après, à titre d'exemple non limitatif, une forme d'exécution de la présente invention, en référence aux dessins annexés sur lesquels :

La figure 1 est une vue en perspective schématique d'une installation de transfert de plateaux suivant l'invention au cours des opérations successives de chargement des plateaux sur le portique de chargement, puis sur le chariot de transfert et enfin dans un appareil de traitement tel qu'un lyophilisateur.

La figure 2 est une vue en perspective schématique de l'installation pendant le déchargement de l'appareil de traitement, par l'intermédiaire du chariot de transfert et du portique de déchargement.

La figure 3 est une vue en perspective simplifiée d'une forme d'exécution d'un portique de chargement ou de déchargement.

Les figures 4 et 5 sont des vues respectivement en plan et de face dudit portique.

La figure 6 est une vue en perspective du chariot de transfert.

La figure 7 est une vue de face du chariot de transfert en position d'arrêt en appui sur le sol.

La figure 8 est une vue en perspective simplifiée du chariot mobile dépourvu des glissières et des fourches mobiles de chaque étage.

La figure 9 est une vue en perspective schématique d'une fourche mobile, partiellement sortie, d'un étage du chariot de transfert.

La figure 10 est une vue en perspective, à plus grande échelle, du mécanisme d'accouplement entre un flanc vertical mobile et l'une des fourches du chariot de transfert.

La figure 11 est une vue en perspective de la plate-forme de transfert mobile du portique de chargement alignée dans un même plan horizontal qu'un étage du chariot de transfert.

La figure 12 est une vue en perspective de la plate-forme de transfert mobile et de l'étage du chariot de transfert situés au même niveau au cours du transfert d'un groupe de plateaux sur le chariot mobile.

La figure 13 est une vue en coupe horizontale du portique de chargement et du chariot de transfert mobile au cours du transfert d'un groupe de plateaux sur le chariot mobile.

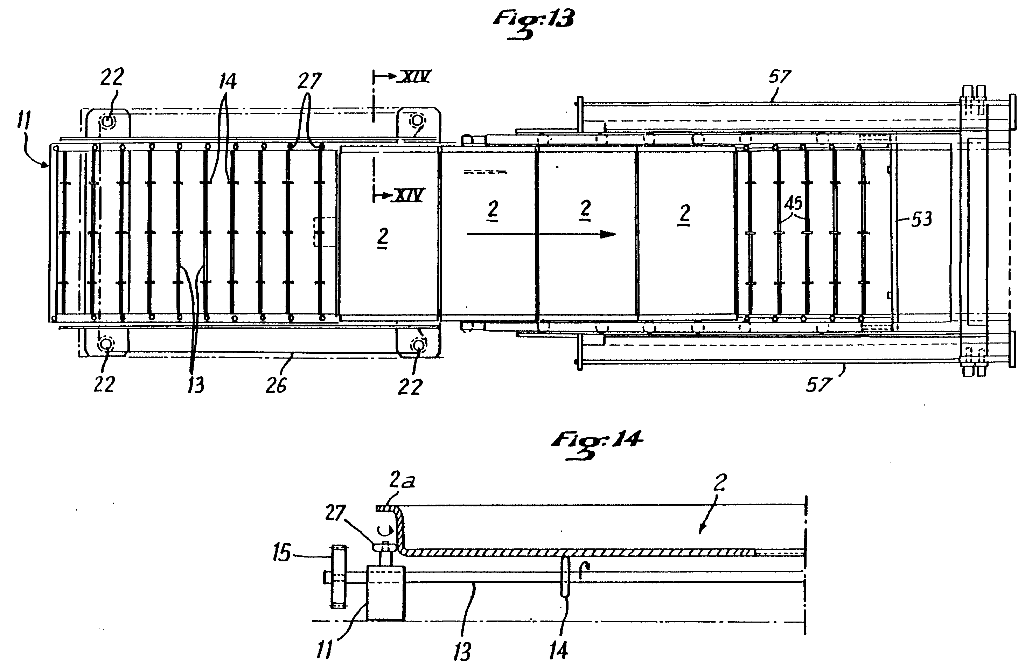

La figure 14 est une vue en coupe verticale et transversale, à plus grande échelle, faite suivant la ligne XIV-XIV de la figure 13.

La figure 15 est une vue en coupe horizontale du lyophilisateur et du chariot mobile au cours du transfert d'un groupe de plateaux entre eux.

La figure 16 est une vue en coupe verticale et transversale, à plus grande échelle, faite suivant la ligne XVI-XVI de la figure 15.

La figure 17 est une vue en coupe verticale et transversale, à plus grande échelle, faite suivant la ligne XVII-XVII de la figure 15.

La figure 18 est une vue en coupe horizontale du lyophilisateur et du chariot mobile au cours du retour à vide d'une fourche mobile vers le chariot, après dépôt d'un groupe de plateaux à l'intérieur du lyophilisateur.

La figure 19 est une vue en coupe verticale et transversale, à plus grande échelle, faite suivant la ligne XIX-XIX de la figure 18.

La figure 20 est une vue en coupe verticale et transversale, à plus grande échelle, faite suivant la ligne XX-XX de la figure 18.

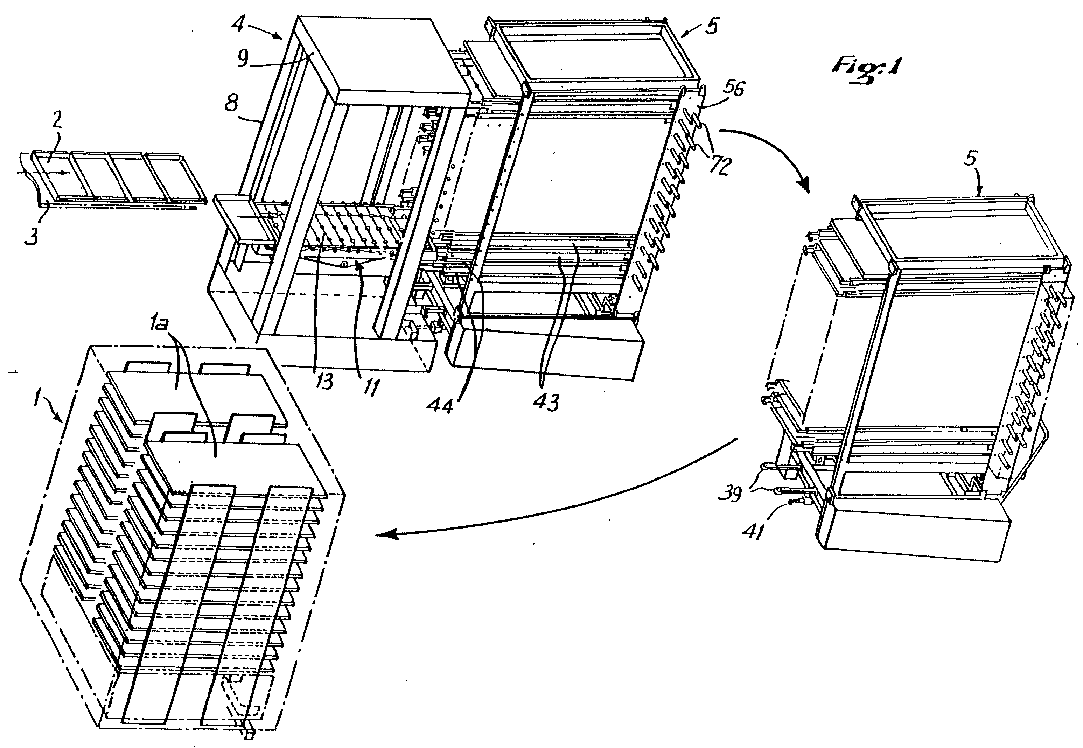

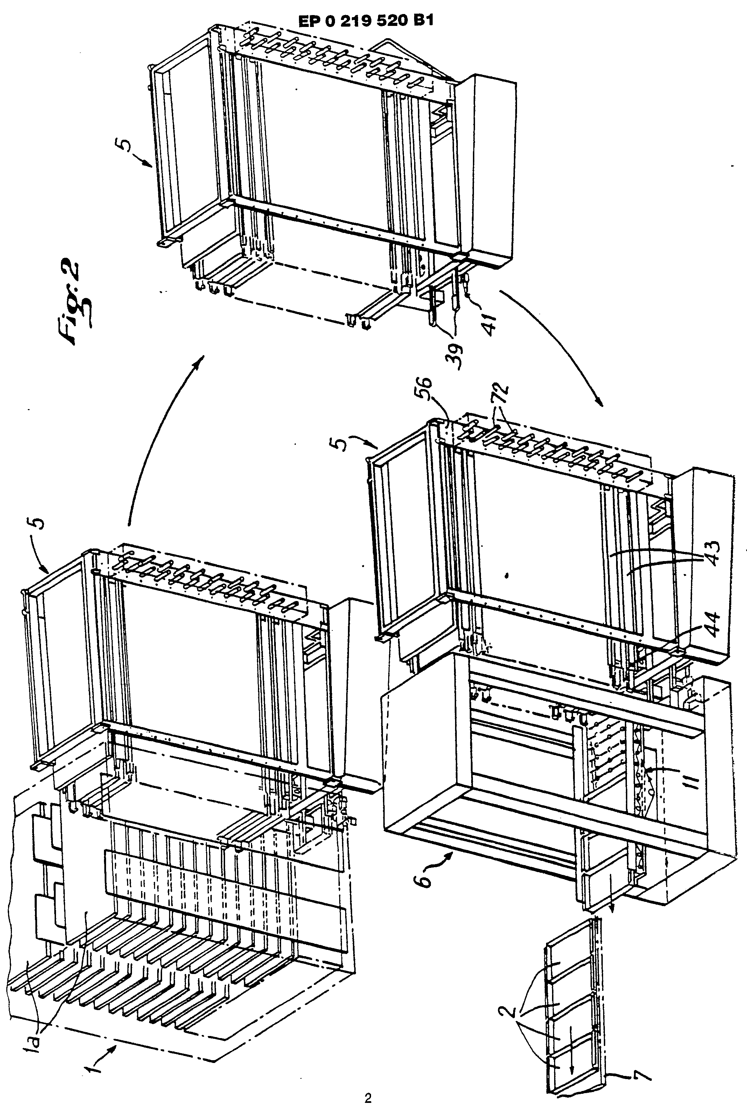

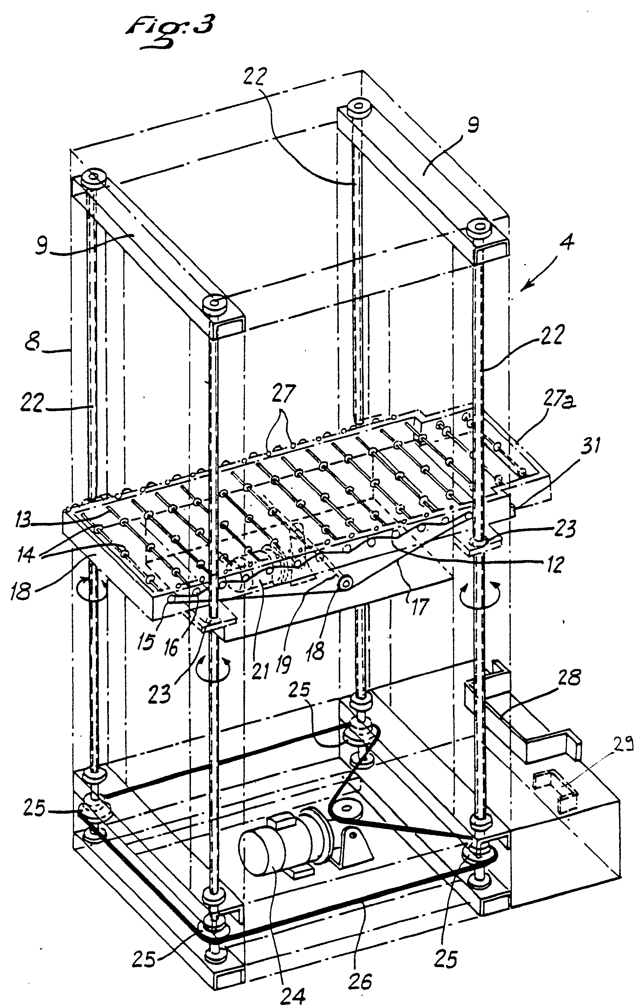

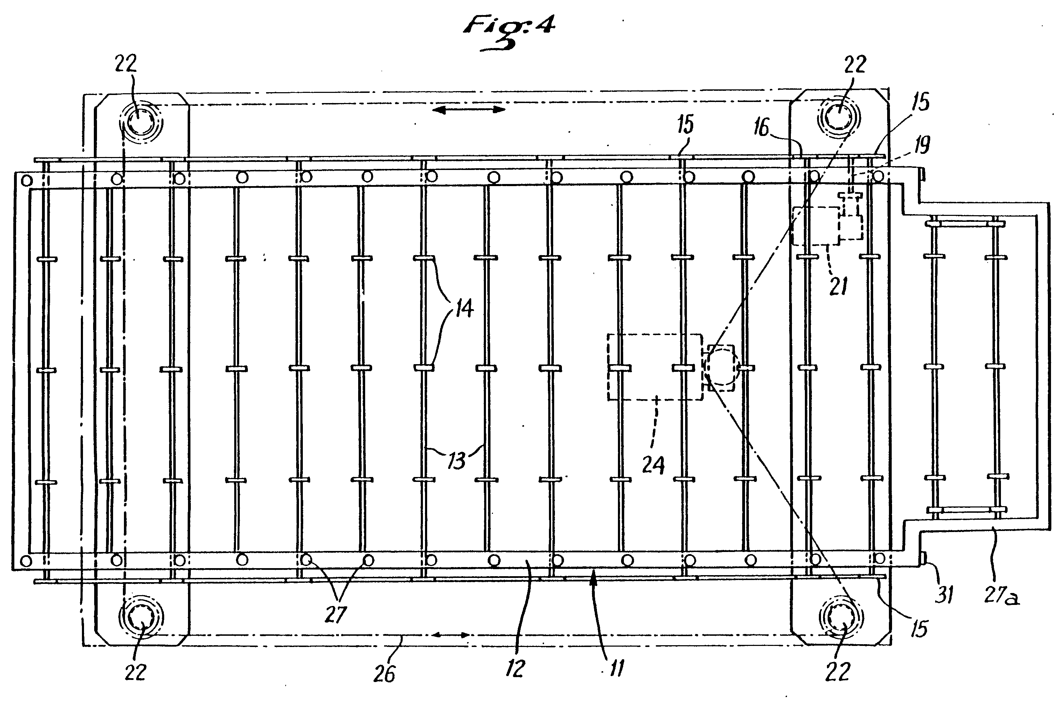

L'installation suivant l'invention qui est représentée dans son ensemble sur les figures 1 et 2, est destinée à charger dans un appareil de traitement quelconque 1, tel qu'un lyophilisateur, des plateaux 2 arrivant à la suite des uns des autres sur un convoyeur d'arrivée 3. Ces plateaux doivent être répartis, sur les diverses étagères du lyophilisateur 1, chaque étagère étant destinée à recevoir un seul plateau ou un groupe de plusieurs plateaux adjacents, par exemple au nombre de quatre. Chacun de ces plateaux 2 porte, dans cet exemple non limitatif, un certain nombre de flacons contenant des produits devant être lyophilisés.

L'installation suivant l'invention utilise, pour le chargement des plateaux dans le lyophilisateur 1, un portique de chargement 4, permettant de former des groupes de quatre plateaux chacun et de faire passer ensuite chaque groupe de quatre plateaux ainsi formé dans l'un des étages de réception d'un chariot de transfert mobile 5.

Une fois le chariot de transfert mobile 5 chargé, on le déplace pour l'amener devant le lyophilisateur 1 et ensuite on procède au transfert de tous les groupes de plateaux ou de certains d'entre eux, si on le désire, sur les étagères du lyophilisateur 1. L'ensemble de cette opération de chargement du lyophilisateur 1 est illustré sur la figure 1.

Pour le déchargement du lyophilisateur 1, opération qui est illustrée sur la figure 2, on amène le chariot de transfert 5, alors vide, devant le lyophilisateur 1, on transfère ensuite les plateaux de l'intérieur du lyophilisateur 1 aux divers étages du chariot de transfert 5, puis on amène le chariot de transfert ainsi chargé devant un portique de déchargement 6 qui permet de faire passer les divers groupes de plateaux 2 sur un convoyeur de départ 7.

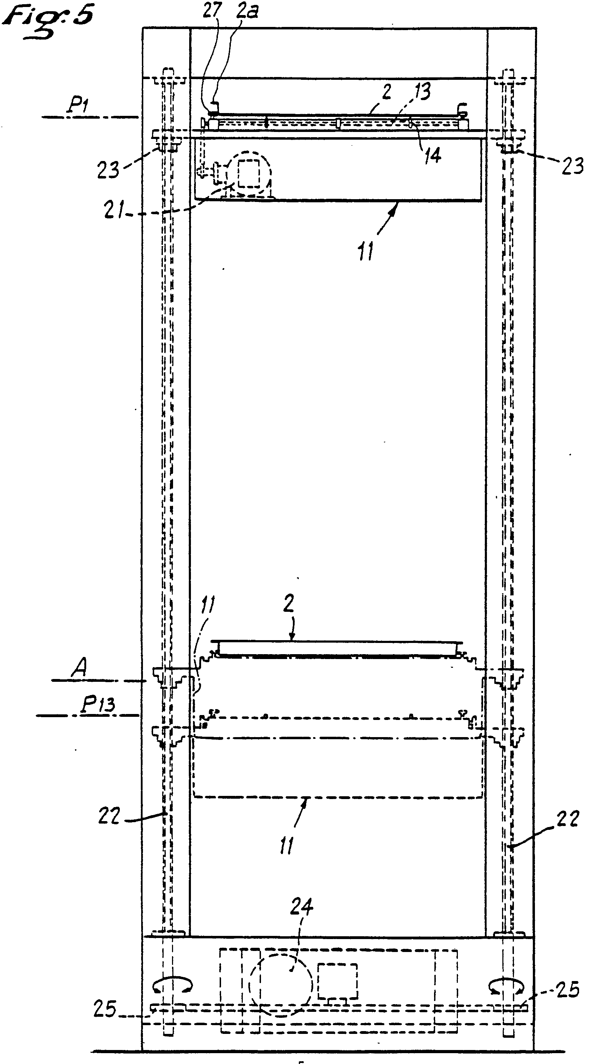

On décrira maintenant, en se référant plus particulièrement aux figures 3 à 5, une forme d'exécution non limitative d'un portique de chargement 4 (ou de déchargement 6). Le portique de chargement 4 comprend un bâti parallélépipédique, constitué de montants 8 et de traverses horizontales 9, ce bâti étant placé sur le sol au voisinage de l'extrémité du convoyeur d'arrivée 3, dans l'axe de celui-ci. Le portique de chargement 4 comprend une plate-forme de transfert horizontale 11, mobile verticalement sur le bâti. Cette plate-forme 11 est constituée par un cadre 12 rectangulaire entre les deux grands côtés duquel s'étendent des tiges transversales 13 portant des roulettes 14. Chacune des tiges transversales 13 porte, à ses deux extrémités, des roues dentées 15 ou 16 avec lesquelles sont en prise deux chaînes sans fin 17. L'une de ces chaînes 17 passe sur une roue dentée d'entraînement 18 qui est solidaire d'un arbre transversal 19 qui est entraîné en rotation par un moteur électrique 21 porté par le cadre 12 de la plate-forme de transfert 11. Les roues dentées 15 et 16 sont disposées alternativement, le long de chaque côté longitudinal du cadre 12, les roues dentées 15 étant solidaires des tiges 13 correspondantes tandis que les roues dentées 16, placées entre les roues dentées 15, sont montées folles sur les tiges associées. Chaque chaîne sans fin 17 passe alternativement sur une roue dentée motrice 15, puis sous une roue dentée folle 16, puis sur une roue dentée motrice 15 et ainsi de suite. On voit donc que la rotation du moteur électrique 21 provoque la rotation concomitante d'un groupe de tiges motrices 13 portant des roulettes 14, les tiges 13 se trouvant entre les précédentes, ainsi que leurs roulettes 14 étant montées folles sur le cadre 12 et étant ainsi entraînées en rotation par suite de leur contact avec les plateaux 2 en mouvement.

Le mouvement vertical de la plate-forme de transfert 11 est réalisé au moyen de quatre tiges filetées verticales 22, portées par les quatre montants 8 du bâti et qui sont engagées dans quatre écrous 23 solidaires du cadre 12, dans les quatre angles de celui-ci. Les quatre tiges filetées 22 sont entraînées simultanément en rotation, dans un sens ou dans l'autre, par un moteur électrique 24 monté à la base du bâti du portique et qui est accouplé à des pignons 25 solidaires des extrémités inférieures des tiges filetées 22, par l'intermédiaire d'une chaîne sans fin 26. Par conséquent la rotation du moteur 24 dans un sens ou dans l'autre provoque la rotation concomitante, dans le même sens, des quatre tiges filetées 22 et par conséquent la montée ou la descente de la plate-forme de transfert 11.

Le cadre 12 de cette plate-forme de transfert 11 porte, sur les bords supérieurs de ses côtés longitudinaux, des galets 27 d'axes verticaux qui assurent le guidage latéral des plateaux 2 lorsque ceux-ci sont placés manuellement, les uns à la suite des autres, sur la plate-forme de transfert 11, dans le portique de chargement 4, ou en sont extraits, dans le portique de déchargement 6.

Le cadre 12 de la plate-forme de transfert 11 est prolongé, à son extrémité postérieure qui est tournée vers le chariot de transfert mobile 5, par une partie 27a en forme de U, de plus petite largeur que celle du cadre 12 et qui porte des tiges 13 pourvues de roulettes 14 et entraînées en rotation avec les autres tiges 13. Cette extension 27a est destinée à assurer la continuité du mouvement de transfert des plateaux comme on le verra plus loin.

Le portique de chargement 4 ou de déchargement 6, de même que le lyophilisateur 1, présentent chacun, sur leur face postérieure qui est tournée vers le chariot de transfert mobile 5, un guide de centrage 28 qui est solidaire du socle du portique et qui présente en plan la forme d'un U ouvert vers l'arrière, en direction du chariot. Ce guide de centrage 28 est avantageusement constitué par un profilé soudé au socle du bâti du portique. A côté de ce guide de centrage 28 est également fixée, sur le socle du portique, une butée 29 contribuant à l'immobilisation du chariot de transfert 5 comme on le verra plus loin.

La mise en position verticale automatique de la plate-forme de transfert 11 est réalisée au moyen d'une cellule photo-électrique de repère d'étage 31 qui est portée par la face transversale postérieure du cadre 12 de la plate-forme de transfert 11 et qui coopère avec des réflecteurs prévus sur la face antérieure du chariot de transfert 5, à raison d'un réflecteur par étage de ce chariot.

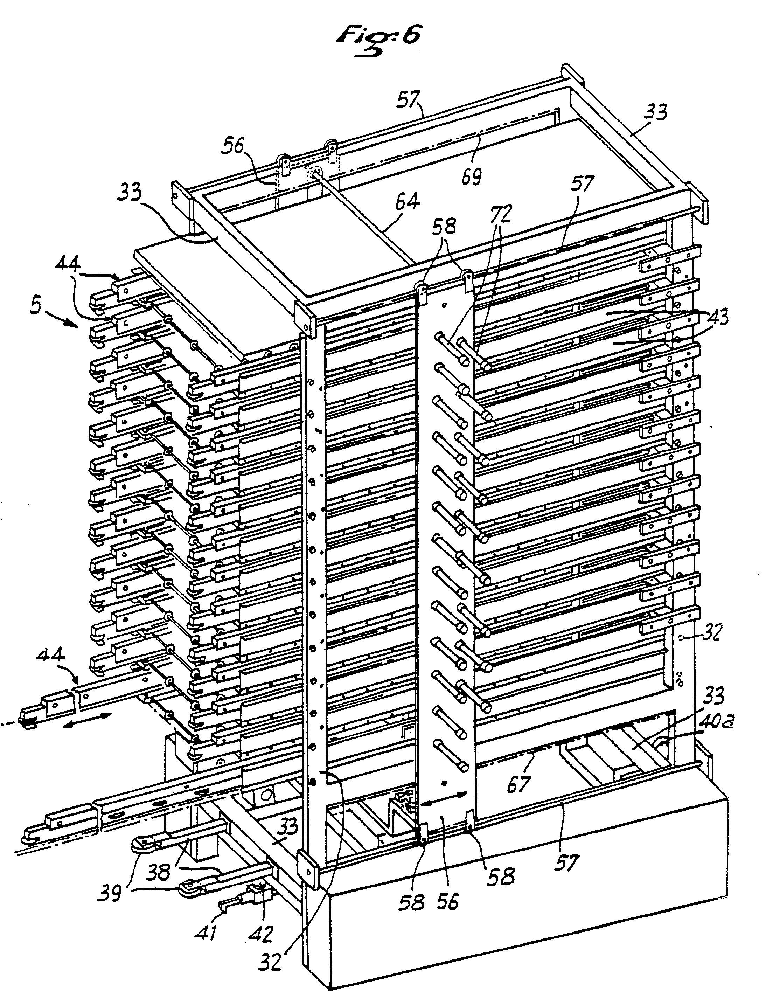

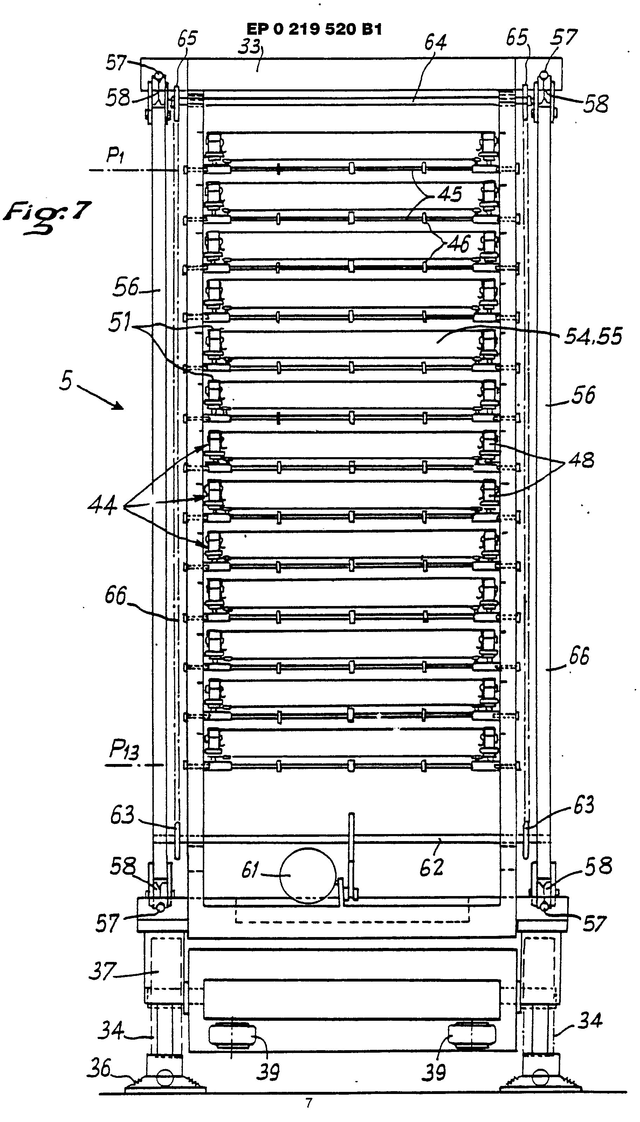

On décrira maintenant, en se référant plus particulièrement aux figures 6 à 10, une forme d'exécution du chariot de transfert 5. Ce chariot comprend un bâti parallélépipédique constitué de quatre montants 32 reliés entre eux par des traverses horizontales supérieures et inférieures 33. Le bâti du chariot de transfert 5 repose sur le sol par l'intermédiaire de roues avant 34 et arrière 34a, les roues arrières 34a étant montées pivotantes autour d'axes verticaux. Ces roues 34, 34a sont solidaires des tiges de vérins verticaux 35 qui permettent de les placer soit en position basse pour le déplacement du chariot de transfert 5 soit en position haute lorsque le chariot 5 est immobilisé pendant les opérations de transfert des plateaux vers le chariot mobile 5 ou à partir de celui-ci. Pendant une opération de transfert le chariot mobile 5 repose alors sur le sol par l'intermédiaire de pieds 36 actionnés par des vérins verticaux 37.

A sa partie antérieure et inférieure le bâti du chariot mobile 5 est solidaire de deux barres longitudinales 38 s'étendant en direction des portiques 4, 6 ou du lyophilisateur 1 et portant à leurs extrémités des galets 39 d'axes verticaux. Ces galets sont destinés à s'engager dans les guides de centrage 28 en forme de U ouvert vers l'arrière, pour assurer ainsi une mise en position correcte du chariot mobile 5 en face d'un portique 4 ou 6 du lyophilisateur 1.

Le bâti du chariot mobile 5 porte également, à sa partie inférieure, une barre longitudinale 40 terminée, à son extrémité antérieure, par un crochet 41 pouvant être abaissé ou levé par un vérin vertical 42. Ce crochet peut être déplacé longitudinalement par rotation d'un volant de commande de blocage 40a prévu à l'extrémité postérieure de la barre. Le crochet 41 est destiné à s'agripper sur les butées 29 des portiques 4, 6 ou du lyophilisateur 1, pour immobiliser fermement le chariot mobile 5 pendant chaque opération de transfert.

Le chariot mobile 5 comporte plusieurs étages superposés, par exemple au nombre de treize, sur chacun desquels peut être stocké un groupe de quatre plateaux 2. Chaque étage est défini par une paire de glissières horizontales opposées 43 fixées aux montants 32 et qui sont constituées par des équerres. Sur chaque paire de glissières 43 est monté mobile horizontalement et longitudinalement, dans les deux sens, un dispositif ou cadre de transport des plateaux désigné dans son ensemble par la référence 44, ce dispositif constituant une. fourche à deux branches. Chaque glissière 43 comprend une aile verticale 43a constituant un guidage latéral pour la fourche mobile 44 et une aile horizontale 43b s'étendant vers l'intérieur et constituant un chemin de roulement pour cette fourche mobile 44. Des tiges horizontales et transversales 45 s'étendent entre les deux ailes horizontales 43b des glissières 43 et ces tiges 45 portent des roulettes 46 pouvant supporter les plateaux. Par ailleurs les ailes horizontales 43b portent également le long de leurs bords, à des intervalles appropriés, des galets 47, d'axes verticaux, lesquels assurent le guidage latéral des plateaux. Chaque branche de la fourche 44 porte également, à son extrémité antérieure, un petit galet 47A destiné à rouler sur une face latérale des plateaux.

Chaque branche longitudinale de la fourche mobile 44 comprend deux éléments à savoir un support allongé inférieur 48, en forme de barre, roulant sur l'aile horizontale 43b des glissières 43 par l'intermédiaire de roulettes 42 d'axes horizontaux et transversaux, et un profil supérieur 51, à section droite en forme de U inversé, monté à coulissement vertical limité par rapport au support inférieur 48. L'aile interne de chaque profil 51 est prolongée, à son extrémité inférieure, par une patte 51a s'étendant vers l'intérieur, c'est-à-dire vers les plateaux 2, et qui est destinée à coopérer avec des ailes horizontales et longitudinales externes 2a des plateaux 2, pour soulever ceux-ci, comme on le verra plus loin. Un joint gonflable 52 s'étend. longitudinalement entre le support inférieur 48 et le profil supérieur 51, sur toute la longueur de ceux-ci, il est fermé à son extrémité antérieure 52a et il peut communiquer, à son extrémité postérieure, avec une source d'air comprimé, par l'intermédiaire d'une canalisation longitudinale 53 portée par la partie postérieure de la fourche mobile 44. Cette partie postérieure comprend deux traverses 54, 55 formant un cadre rectangulaire avec les parties postérieures des supports inférieurs 48.

Pour renforcer la rigidité de l'ensemble mobile, on peut prévoir éventuellement un arceau 44A formant entretoise entre les extrémités antérieures des deux supports 48 et s'engageant à cet effet, par ses branches verticales dans des trous 44B prévus dans chaque support 48 et débouchant dans la surface supérieure de celui-ci, près de son extrémité antérieure.

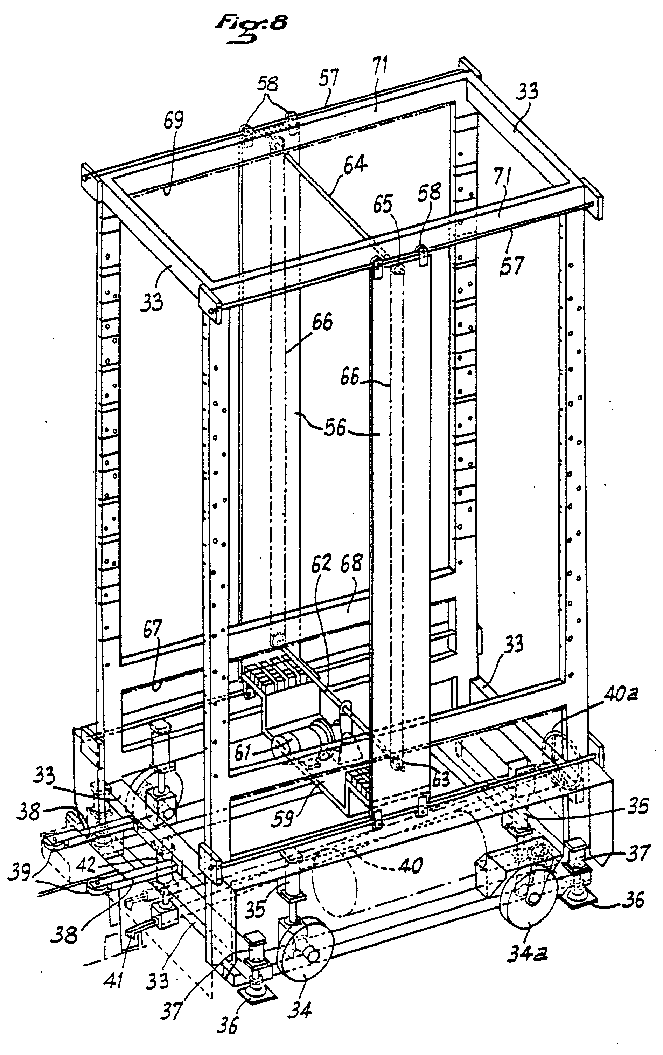

Par ailleurs le chariot de transfert 5 comporte un ensemble mobile horizontalement et longitudinalement pour l'entraînement simultané des fourches mobiles 44 de tous les étages ou seulement de certains d'entre eux. Cet ensemble mobile comprend, comme on peut mieux le voir sur les figures 6 et 8, deux flancs verticaux latéraux 56 qui peuvent coulisser longitudinalement, à leurs extrémités supérieures et inférieures, sur des tiges de guidage longitudinales et horizontales 57 prévues à la partie supérieure et à la partie inférieure du bâti du chariot 5. Les deux flancs 56 portent des roulettes 58 roulant sur les tiges de guidage 57 et ils sont disposés en regard l'un de l'autre transversalement. Ils sont reliés, à leurs extrémités inférieures, par une traverse horizontale 59, à section droite en forme d'oméga ouvert vers le haut et qui porte un moteur électrique 61, et, à leurs parties supérieures, par une traverse non représentée. L'arbre de sortie de ce moteur est accouplé à un arbre d'entraînement transversal 62 qui porte, à chacune de ses extrémités, une roue à chaîne 63. Cet arbre 62 est monté à rotation, à ses deux extrémités, dans les parties inférieures des deux flancs verticaux 56. Par ailleurs un autre arbre transversal 64 s'étend entre les parties supérieures des deux flancs verticaux 56. Cet arbre 64, qui est monté à rotation sur les deux flancs verticaux 56, porte, à ses deux extrémités, des roues à chaîne 65. Les roues à chaîne inférieures 63 et supérieures 65 des arbres 62 et 64 sont reliées entre elles par des chaînes sans fin verticales 66. Par ailleurs chacun des arbres transversaux 62 et 64 présente des parties extrêmes cannelées qui sont en prise avec des crémaillères longitudinales, à savoir des crémaillères inférieures 67, portées par des longerons inférieurs 68 du bâti et avec lesquelles sont en prise les parties cannelées de l'arbre inférieur 62, et des crémaillères supérieures 69 portées par des longerons supérieurs 71 et avec lesquelles sont en prise les parties cannelées de l'arbre transversal supérieur 64. Par conséquent l'alimentation du moteur 61 provoque la rotation simultanée dans un sens ou dans l'autre, des deux arbres 62 et 64 et par conséquent une translation longitudinale de l'ensemble des deux flancs verticaux 56 sur les tiges de guidage 57.

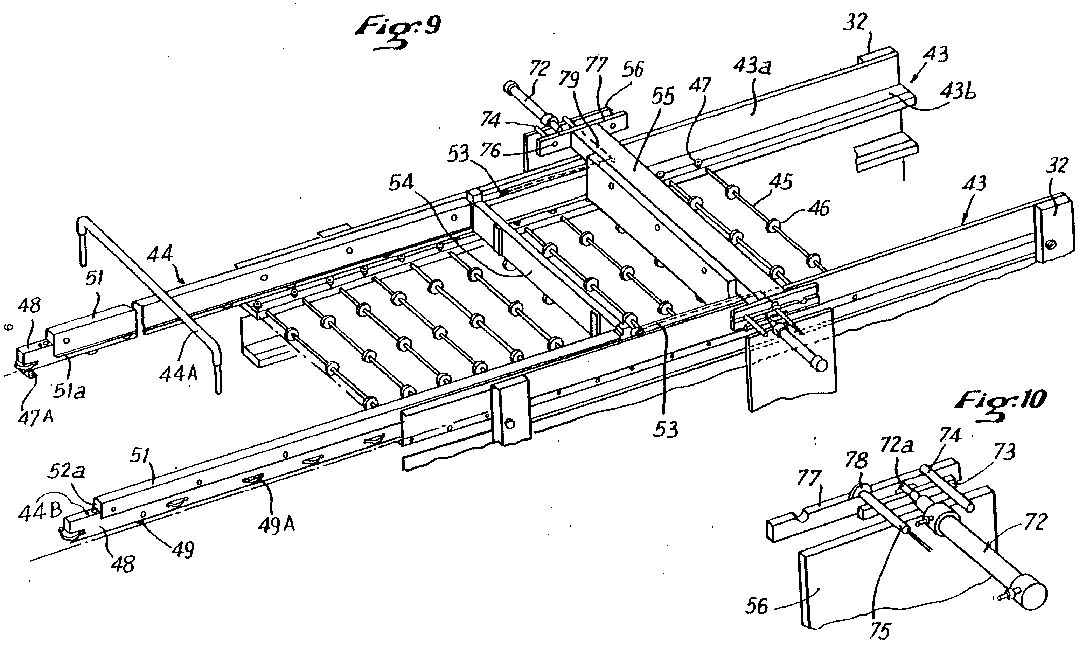

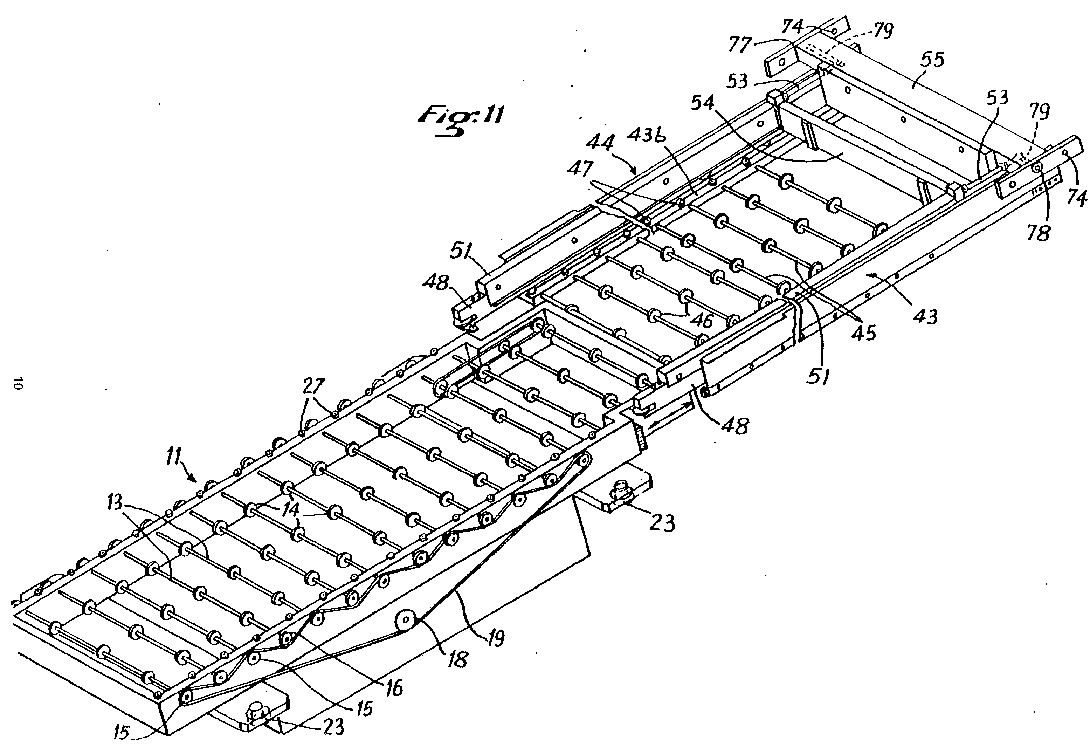

Chaque flanc vertical 56 porte des dispositifs d'accouplement entre ce flanc 56 et chacune des diverses fourches mobiles 44 associées aux divers étages. Plus particulièrement chaque flanc vertical 56 porte, sur sa face externe, un vérin d'accouplement 72 par étage, ce vérin s'étendant horizontalement et transversalement vers l'extérieur dans le plan de l'étage considéré. Dans le cas de l'exemple décrit chaque flanc vertical mobile 56 porte par conséquent treize vérins 72 correspondant aux treize étages du chariot de transfert 5. Chaque vérin 72 commande l'accouplement entre le flanc vertical 56 qui le porte et la fourche mobile 44 de l'étage auquel il est associé. Plus particulièrement, ainsi qu'il est représenté sur les figures 9 et 10, la tige 72a de chaque vérin d'accouplement 72 est solidaire d'une plaquette 73 qui porte un doigt d'entraînement 74 et un embout de raccordement 75, ces deux éléments s'étendant transversalement en direction de la traverse postérieure 55 de la fourche mobile 44. Le doigt d'entraînement 74 porté par la plaquette 73 est disposé en regard d'un trou ou d'une encoche 76 prévus dans une barre 77 s'étendant longitudinalement et qui est fixée à l'extrémité de la traverse postérieure 55 de la fourche mobile 44. Dans cette barre 77 est également formé un orifice 78 qui communique, par un conduit transversal 79 logé dans la traverse 55, avec la canalisation longitudinale 53 reliée au joint gonflable 52. Par conséquent lorsqu'un vérin d'accouplement 72 est alimenté par le fond, sa tige 72a sort du corps du vérin en direction de la barre 77 si bien que le doigt d'entraînement 74 s'engage dans le trou 76 de la barre 77 et que l'embout 75 s'engage dans l'orifice 78 de cette barre. A partir de ce moment la traverse postérieure 55 et par conséquent l'ensemble de la fourche mobile 44 se trouvent accouplés au flanc vertical mobile 56. Par ailleurs chaque joint gonflable 52 peut être alimenté en air comprimé à partir d'une source d'air comprimé externe non représentée qui est reliée à l'embout 75 se trouvant alors engagé dans l'orifice 78.

On décrira maintenant d'une manière détaillée le fonctionnement de l'installation de transfert de plateaux qui vient d'être décrit.

Pour le transfert des plateaux 2 qui arrivent sur le convoyeur 3, dans le lyophilisateur 1 on amène tout d'abord le chariot de transfert 5 à proximité immédiate du portique de chargement 4, dans l'axe de celui-ci et en arrière, comme il est indiqué sur la figure 1. La mise en position est assurée par l'engagement des galets 39 dans le guidage 28, après quoi on immobilise le chariot de transfert 5 par rapport au portique de chargement 4, au moyen du crochet 41 serré contre la butée 29, par action sur le volant de manœuvre 40a. Les vérins verticaux 37 sont alimentés par le fond pour provoquer la descente des pieds 36 et les vérins verticaux 35 sont alimentés par le nez pour provoquer le soulèvement des roues 34 et 34a qui sont écartées du sol. Le chariot de transfert repose alors sur le sol par ses quatre pieds 36.

Pour l'opération de chargement du chariot de transfert 5 un opérateur place manuellement les plateaux 2 qui arrivent les uns après les autres sur le convoyeur 3, sur la plate-forme de transfert 11 qui se trouve à un niveau de départ approprié A, dans la position représentée en trait mixte sur la figure 5. Une fois que quatre plateaux ont été placés sur la plate-forme de transfert 11, l'opérateur commande le déplacement vertical automatique de cette plate-forme 11 jusqu'à ce qu'elle vienne se placer en regard de l'étage du chariot de transfert 5 devant être chargé avec le groupe de plateaux considéré. Sur la figure 5 ont été indiqués schématiquement le niveau de l'étage supérieur P1 et celui de l'étage inférieur P13 du chariot de transfert 5, la plate-forme de transfert 11 étant représentée en trait plein dans sa position extrême supérieure, lorsqu'elle se trouve au niveau de l'étage supérieur P1, et en tirets dans sa position extrême inférieure, lorsqu'elle se trouve au niveau de l'étage inférieur P13. Le mouvement vertical de la plate-forme 11 est commandé par l'alimentation du moteur électrique 24 qui entraîne en rotation les quatre tiges filetées 22, comme il a été indiqué précédemment. La plate-forme 11 s'arrête automatiquement au niveau de l'étage devant être chargé, cet arrêt étant obtenu à partir d'un circuit de commande utilisant le fait que la cellule de repérage d'étage 31 est arrivée en regard des réflecteurs situés à l'étage désiré du chariot de transfert 5.

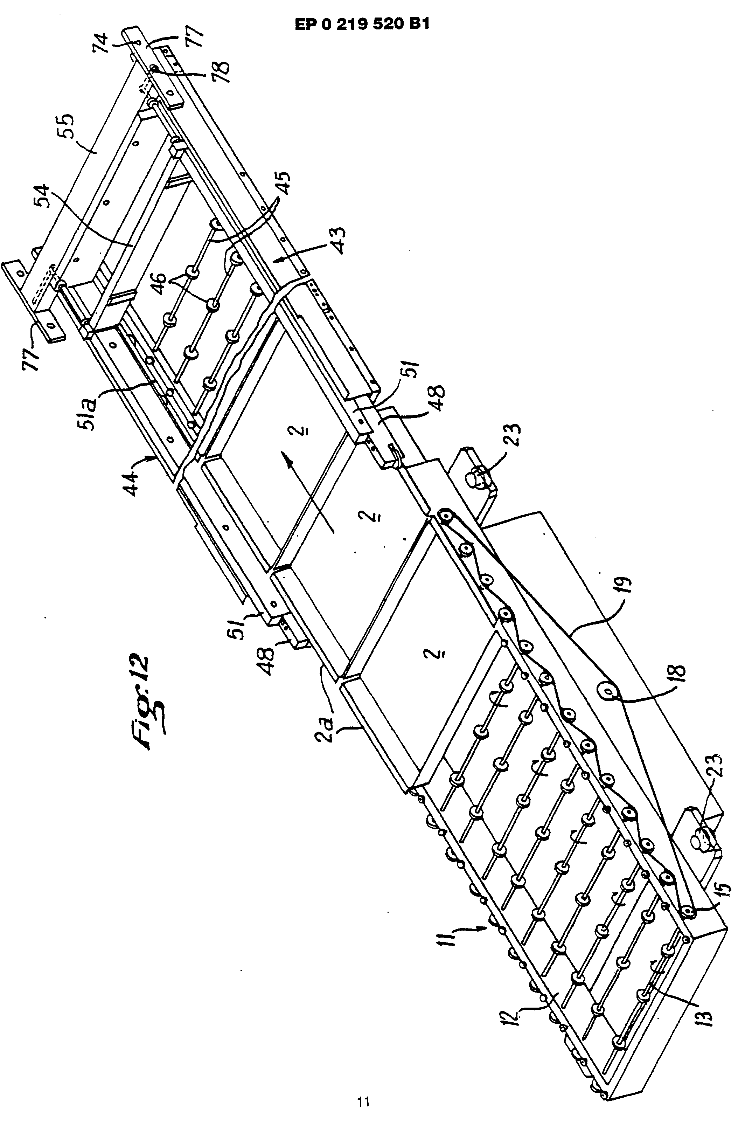

La figure 12 montre la plate-forme de transfert 11 arrivée en regard de l'étage désiré du chariot, tandis qu'a lieu le transfert des plateaux 2 de la plate-forme 11 à l'étage récepteur du chariot. Pour réaliser automatiquement ce transfert le circuit de commande provoque l'alimentation du moteur électrique 21 porté par la plate-forme 11 de manière que les tiges motrices 13 portant les roulettes 14 soient entraînées dans le sens des aiguilles d'une montre, comme il est indiqué par les flèches sur la figure 12, par l'intermédiaire des roues dentées 18, des chaînes sans fin 19 et des roues dentées 15 solidaires des tiges motrices 13. Le groupe des quatre plateaux 2 est donc ainsi déplacé vers l'étage en regard du chariot de transfert 5 et ces plateaux pénètrent, les uns à la suite des autres, entre les deux branches de la fourche mobile 44, en portant sur les roulettes 46 des tiges 45 montées folles à rotation entre les glissières 43. Une fois que les quatre plateaux 2 ont été introduits entre les deux branches de la fourche mobile 44, la plate-forme de transfert 11 redescend en position de départ A pour être prête à recevoir un nouveau groupe de plateaux 2 devant être chargés dans un autre étage du chariot de transfert.

Une fois que le chariot de transfert 5 a été totalement ou partiellement chargé, on le désolidarise du portique de chargement 4, en dégageant le crochet 21 de la butée 29, on alimente les vérins verticaux 35 par le fond pour faire descendre les roues 34 et 34a qui viennent alors en appui sur le sol et on alimente les vérins 37 par le nez pour escamoter les pieds 36. A partir de ce moment il est possible de déplacer manuellement le chariot 5 pour l'amener en face du lyophilisateur 1 comme il est illustré schématiquement sur la figure 1. L'opération de chargement du lyophilisateur peut alors avoir lieu après que le chariot de transfert 5 a été accouplé au lyophilisateur par le crochet 41 et mis en appui sur le sol par ses pieds 36, après escamotage des roues 34 et 34a, comme dans le cas précédent.

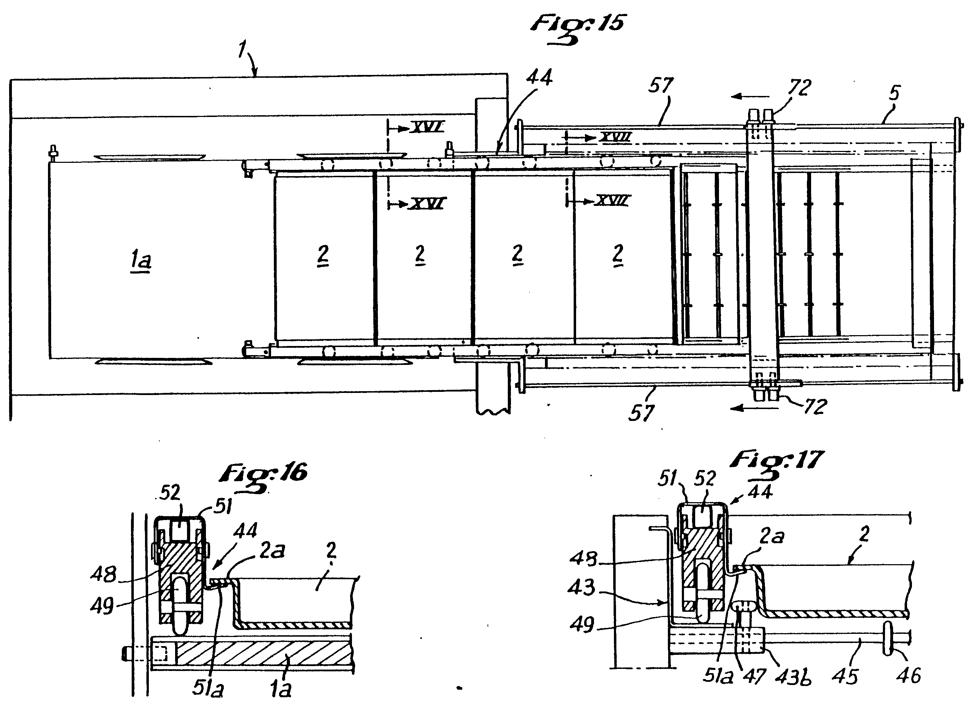

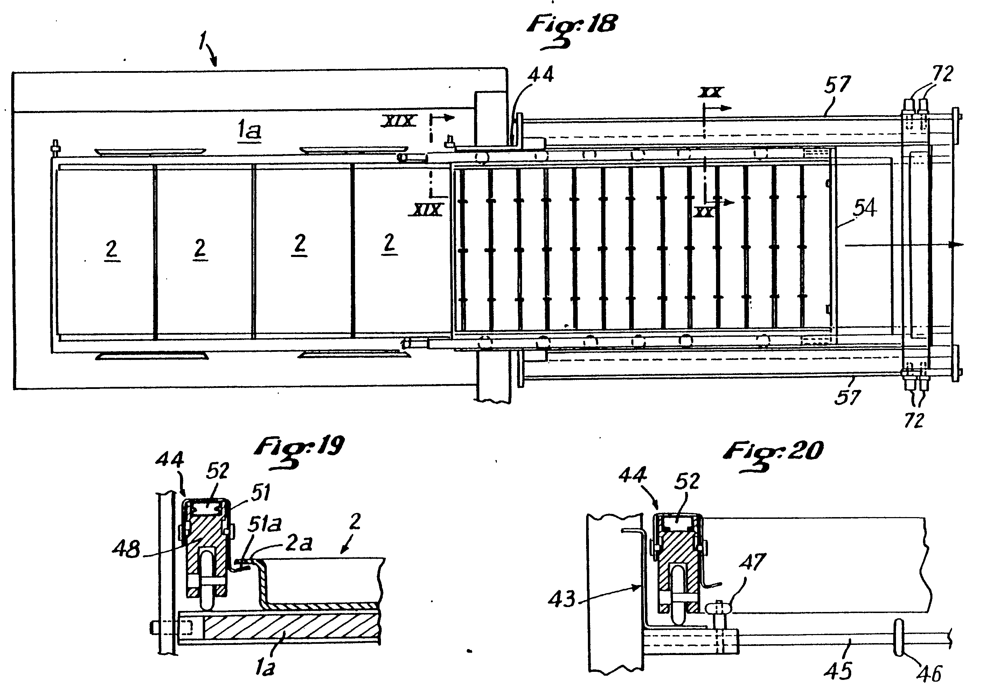

On décrira maintenant en se référant plus particulièrement aux figures 15 à 17, l'opération de chargement du lyophilisateur 1, en considérant le transfert d'un groupe de plateaux 2 se trouvant à un étage déterminé du chariot 5, entre les branches de la fourche mobile 44, en direction des étagères 1a du lyophilisateur 1. Il est bien entendu qu'en fait l'opération de transfert des plateaux d'un étage du chariot mobile 5 à un étage en regard du lyophilisateur 1 peut avoir lieu simultanément pour tous les étages considérés ou seulement pour certains étages sélectionnés à volonté. Pour assurer le transfert des plateaux 2 du chariot 5 au lyophilisateur 1 on alimente tout d'abord, par le fond, les vérins d'accouplement 72 portés par les flancs verticaux 56 et qui correspondent aux étages où les transferts doivent être effectivement réalisés. La sortie de la tige 72a de chaque vérin d'accouplement 72 qui en résulte, se traduit par l'engagement du doigt 74 dans le trou 76 en regard de la barre 77 solidaire de la traverse 55. Simultanément l'embout 75 s'engage dans l'orifice 78 et le circuit de commande générale de l'installation provoque alors l'alimentation en air comprimé des joints gonflables 52. Ceux-ci se dilatent alors transversalement, ce qui provoque un mouvement de soulèvement des profils 51. Les pattes inférieures 51a qui sont solidaires de leurs ailes internes, viennent alors en contact avec les ailes horizontales et longitudinales 2a des plateaux 2 qui se trouvent ainsi soulevés par rapport aux roulettes 46 sur lesquelles ils reposaient précédemment. Leurs parois verticales et longitudinales restent toutefois en contact avec les galets de guidage 47 d'axes verticaux comme on peut le voir sur la figure 17. Ensuite le moteur électrique 61 qui commande le déplacement longitudinal des flancs 56 est alimenté dans le sens approprié provoquant un déplacement des deux flancs verticaux 56 de l'arrière vers l'avant, vers le lyophilisateur 1, c'est-à-dire de la droite vers la gauche sur la figure 15, comme il est indiqué par les flèches. Ce mouvement des flancs verticaux 56 est transmis, par l'intermédiaire des doigts d'entraînement 74 alors engagés dans les trous 76, aux fourches mobiles 44 placées aux étages dont les vérins 72 ont été alimentés. Chacune de ces fourches mobiles 44 est alors déplacée dans son ensemble de la droite vers la gauche, en roulant sur les ailes horizontales 43b des glissières 43 et en étant guidée latéralement, par l'intermédiaire de galets 49A à axe vertical portés par la fourche, par les ailes verticales 43a de ces glissières. Durant ce mouvement les plateaux 42 se trouvent soulevés par rapport aux roulettes 46 des tiges 45 et ils ne frottent donc pas sur celles-ci. La fourche mobile 44 est introduite progressivement à l'intérieur du lyophilisateur 1, jusqu'à ce qu'elle atteigne sa position de fin de course vers la gauche. A ce moment le circuit de commande de l'installation coupe l'alimentation en air comprimé des joints gonflables 52, ceux-ci se dégonflent alors, les profils 51 s'abaissent en déposant les plateaux 2 sur les étagères 1a du lyophilisateur 1. Une fois les quatre plateaux déposés sur les étagères 1a considérées, on alimente le moteur électrique 61 en sens inverse de manière à déplacer les flancs verticaux 56 vers l'arrière, c'est-à-dire de la gauche vers la droite comme il est représenté sur la figure 18. Les plateaux 2 restent alors sur l'étagère 1a et la fourche mobile 44 revient à vide à l'intérieur du bâti du chariot de transfert 5.

Après cette opération, il suffit de désolidariser le chariot de transfert 5 par rapport au lyophilisateur 1 pour pouvoir déplacer de nouveau le chariot de transfert 5.

Les opérations d'extraction des plateaux 2 du lyophilisateur 1, et leur transfert au portique de déchargement 6 s'effectuent de la même manière. Pour le déchargement du lyophilisateur 1 on introduit chaque fourche mobile 44 dans le lyophilisateur 1, les joints 52 étant dégonflés et les profils supérieurs étant en position basse, on alimente ensuite les joints 52 en air comprimé pour soulever les plateaux 2 et les écarter de l'étagère 1a puis on ramène la fourche mobile 44 portant les plateaux 2 à l'intérieur du bâti du chariot de transfert 5. Une fois le chariot ainsi chargé, on l'amène en regard du portique de déchargement 6, comme il est illustré sur la figure 2, on l'immobilise puis on décharge le chariot 5 étage par étage. Pour ce faire on amène la plate-forme de transfert 11 en regard des étages successifs du chariot 5 et on transfère sur cette plate-forme 11 les plateaux de chaque étage, au moyen des fourches mobiles 44. Les plateaux 2 sont alors repris manuellement sur la plate-forme de transfert 11 pour être placés les uns à la suite des autres sur le convoyeur de départ 7.

Bien que dans la forme d'exécution non limitative de l'invention qui a été décrite précédemment, l'installation comporte un portique de chargement 4 et un portique de déchargement 6, elle pourrait ne comporter en fait qu'un seul et même portique utilisé à la fois pour le chargement et le déchargement. Dans ce cas les convoyeurs d'arrivée 3 et de départ 7 des plateaux 2 seraient disposés au voisinage l'un de l'autre ou bien encore l'installation serait associée à un seul convoyeur entraîné dans un sens pour l'arrivée des plateaux 2 et dans le sens inverse pour le départ de ceux-ci.

Par ailleurs bien que l'on ait considéré, dans la description qui précède, le transfert de « plateaux », il va de soi que l'utilisation suivant l'invention pourrait être également utilisée pour assurer le transfert d'objets plats à condition que ceux-ci soient pourvus, le long de deux côtés opposés, d'organes de préhension en saillie vers l'extérieur, tels que les ailes 2a des plateaux 2, pour permettre de soulever ces objets pendant leur transport.

## Revendications

1. Chariot de transfert de plateaux (2) sur des étagères d'un appareil de traitement (1), du type comprenant un bâti déplaçable portant des supports de plateaux (43, 44) à différents étages correspondant auxdites étagères et des moyens d'entraînement (56) pour déplacer longitudinalement les plateaux par rapport à leurs supports, caractérisé en ce que lesdits moyens d'entraînement comprennent des moyens de sélection (72) pour permettre de déplacer simultanément les plateaux de tous les étages du chariot (5) ou de seulement certains d'entre eux.

2. Chariot suivant la revendication 1, caractérisé en ce que les supports (43, 44) sont constitués par des glissières longitudinales horizontales (43) sur lesquelles sont montés mobiles des cadres (44) de transport de plateaux (2).

3. Chariot suivant la revendication 2, caractérisé en ce que les moyens d'entraînement comprennent deux flancs verticaux latéraux (56), disposés en regard l'un de l'autre transversalement, reliés l'un à l'autre et qui peuvent coulisser longitudinalement sur le bâti du chariot (5), des dispositifs (72) d'accouplement sélectif entre ces flancs (56) et chacun des cadres (44) de transport de plateaux et formant lesdits moyens de sélection, et des moyens pour déplacer longitudinalement, dans les deux sens, les deux flancs (56) et les dispositifs d'accouplement qu'ils portent.

4. Chariot suivant la revendication 3, caractérisé en ce que chaque flanc vertical (66) porte, sur sa face externe, un vérin d'accouplement (72) par étage, ce vérin s'étendant horizontalement et transversalement vers l'extérieur dans le plan de l'étage considéré, chaque vérin (72) commandant l'accouplement sélectif entre le flanc vertical (56) qui le porte et le cadre (44) de transport de plateaux (2) de l'étage auquel il est associé.

5. Chariot suivant l'une quelconque des revendications 2 à 4, caractérisé en ce que chaque cadre de transport de plateaux (44) constitue une fourche à deux branches coopérant avec les glissières (43) du chariot (5), chaque glissière comprenant une aile verticale (43a) constituant un guidage latéral pour la fourche mobile (44) et une aile horizontale (43b) s'étendant vers l'intérieur et constituant un chemin de roulement pour cette fourche mobile (44).

6. Chariot suivant la revendication 5, caractérisé en ce que des tiges horizontales et transversales (45) s'étendent entre les deux ailes horizontales (43b) des glissières (43), ces tiges (45) portant des roulettes (46) pouvant supporter les plateaux, et en ce que les ailes horizontales (43b) portent également le long de leurs bords, à des intervalles appropriés, des galets (47), d'axes verticaux, lesquels assurent le guidage latéral des plateaux.

7. Chariot suivant l'une des revendications 5 et 6, caractérisé en ce que chaque branche longitudinale de la fourche mobile (44) comprend deux éléments, à savoir un support allongé inférieur (48), en forme de barre, roulant sur l'aile horizontale (43b) des glissières (43) par l'intermédiaire de roulettes (49) d'axes horizontaux et transversaux, et un profil supérieur (51), à section droite en forme de U inversé, monté à coulissement vertical par rapport au support inférieur (48), l'aile interne de chaque profil (51) étant prolongée, à son extrémité inférieure, par une patte (51a) s'étendant vers l'intérieur, c'est-à-dire vers les plateaux (2), et qui est destinée à coopérer avec des ailes horizontales et longitudinales externes (2a) des plateaux (2), pour soulever ceux-ci, et en ce qu'un joint gonflable (52) s'étend longitudinalement entre le support inférieur (48) et le profil supérieur (51), sur toute la longueur de ceux-ci, ce joint étant fermé à son extrémité antérieure (52a) et pouvant communiquer, à son extrémité postérieure, avec une source d'air comprimé.

8. Chariot suivant la revendication 7, caractérisé en ce que chaque support inférieur (48) porte à son extrémité antérieure une roulette additionnelle (47A), d'axe vertical, de guidage sur les faces latérales des plateaux.

9. Chariot suivant l'une des revendications 7 et 8, caractérisé en ce qu'il comporte un arceau (44A) formant une entretoise entre les extrémités antérieures des deux supports inférieurs (48).

10. Chariot suivant les revendications 4 et 7 prises ensemble, caractérisé en ce que chaque vérin d'accouplement (72) est solidaire d'une plaquette (73) qui porte un doigt d'entraînement (74) et un embout de raccordement (75), ces deux éléments s'étendant transversalement en direction d'une traverse postérieure (55) du cadre (44) de transport de plateaux (2), le doigt d'entraînement (74) porté par la plaquette (73) étant disposé en regard d'un trou ou d'une encoche (76) prévu à l'extrémité de cette traverse postérieure (55), laquelle présente également un orifice (78) qui communique avec le joint gonflable (52) du cadre de transport (44) et en regard duquel se trouve ledit embout de raccordement (75).

11. Installation de chargement et de déchargement d'un appareil de traitement à étagères multiples, caractérisée en ce qu'elle comprend :

au moins un convoyeur d'amenée et/ou d'évacuation de plateaux (3, 7) ; un chariot de transfert (5) suivant l'une quelconque des revendications 1 à 10 ; et, à l'extrémité du ou de chaque convoyeur (3, 7), un portique de chargement et/ou déchargement (4, 6) comportant une plate-forme de transfert mobile verticalement sur un bâti fixe (8, 9), des moyens (22 à 26) pour commander le déplacement vertical de cette plate-forme (11) et l'arrêt à un niveau prédéterminé parmi plusieurs niveaux correspondant respectivement à ceux des étagères de l'appareil de traitement, et des moyens pour transférer les plateaux (2) de la plate-forme de transfert (11) sur chaque étage du chariot et vice-versa.

12. Installation suivant la revendication 11, caractérisée en ce que le cadre (12) de la plate-forme de transfert (11) est prolongé, à son extrémité qui est tournée vers le chariot de transfert mobile (5), par une partie (27a) d'accouplement de plus petite largeur que celle du cadre (12) et qui porte des tiges (13) pourvues de roulettes (14) et entraînées en rotation.

13. Installation suivant l'une des revendications 11 et 12, caractérisée en ce que le portique de chargement et/ou déchargement (4, 6), et l'appareil de traitement comportent des moyens de guidage et de solidarisation sélective du chariot (5).

## Claims

1. Carriage for transfer of trays (2) on to the shelves of a processing appliance (1), of the type comprising a displaceable framework bearing tray supports (43, 44) at different levels corresponding to the said shelves and driving means (56) for longitudinally displacing the trays relative to their supports, characterised in that the said driving means comprise selection means (72) to allow simultaneous displacement of the trays of all the levels of the carriage (5) or of only some of them.

2. Carriage according to claim 1, characterised in that the supports (43, 44) are formed by longitudinal horizontal slides (43) on which are movably installed frames (44) for conveying trays (2).

3. Carriage according to claim 2, characterised in that the driving means comprise two lateral vertical sides (56) placed facing each other transversely, joined one to the other and able to slide longitudinally on the framework of the carriage (5), devices (72) for selective coupling between these sides (56) and each of the frames (44) for conveying trays and forming the said selection means, and means for longitudinally displacing in both directions, the two sides (56) and the coupling devices they carry.

4. Carriage according to claim 3, characterised in that each vertical side (66) carries a coupling ram (72) on its external surface for each level, this ram extending horizontally and transversely towards the outside in the plane of the level in question, each ram operating the selective coupling between the vertical side (56) which carries it and the frame (44) for conveying trays (2) of the level to which it is allocated.

5. Carriage according to any one of claims 2 to 4, characterised in that each tray (44) conveying frame forms a fork with two branches co-operating with the slides (43) of the carriage (5), each slide comprising a vertical flange (43a) forming a lateral guide for the movable fork (44) and a horizontal flange (43b) extending towards the inside and forming a rolling track for this movable fork (44).

6. Carriage according to claim 5, characterised in that horizontal and transverse rods (45) extend between the two horizontal flanges (43b) of the slides (43), these rods (45) bearing rollers (46) able to support the trays, and in that the horizontal flanges (43) likewise carry at appropriate intervals along their edges, rollers (47) with vertical axes which provide the lateral guidance for the trays.

7. Carriage according to one of the claims 5 and 6, characterised in that each longitudinal branch of the movable fork (44) comprises two elements, namely an elongated lower support (48) in the form of a bar rolling on the horizontal flange (43b) of the slides (43) via rollers (49) having horizontal and transverse axes, and an upper section (51) having a cross-section of inverted U-shape, arranged for vertical sliding relative to the lower support (48), the inner flange of each section (51) being extended at its lower end by a lug (51a) extending towards the inside, that is to say towards the trays (2) and which is intended to co-operate with outer horizontal and longitudinal flanges (2a) of the trays (2) to lift these, and in that an expansible joint (52) extends longitudinally between the lower support (48) and the upper section (51) throughout their length, this joint being closed off at its forward end (52) and being able to communicate at its rear end with a source of compressed air.

8. Carriage according to claim 7, characterised in that each lower support (48) carries at its forward end an additional roller (47A), having a vertical axis, for guiding on the lateral surfaces of the trays.

9. Carriage according to one of claims 7 and 8, characterised in that it comprises a hoop (44a) forming a stay between the forward ends of the two lower supports (48).

10. Carriage according to claims 4 and 7 taken together, characterised in that each coupling ram (72) is integral with a small plate (73) which carries a driving finger (74) and a coupling stud (75), these two elements extending transversely in the direction of a rear cross-member (55) of the frame (44) for conveying trays (2), the driving finger (74) carried by the small plate (73) being situated in alignment with a hole or notch (76) provided at the end of this rear cross-member (55) which likewise has an orifice (78) which is in communication with the expansible joint (52) of the conveying frame (44) and in alignment with which is situated the said coupling stud (75).

11. Installation for loading and unloading a multishelved processing appliance, characterised in that it comprises : at least one conveyor for input and/or withdrawal of trays (3, 4) ; a transfer carriage (5) according to any one of claims 1 to 10 ; and, at the end of the or each conveyor (3, 7) a loading and/or unloading gantry (4, 6) comprising a transfer platform movable vertically on a stationary framework (8, 9), means (22 to 26) for effecting the vertical displacement of this platform (11) and stopping at a predetermined level amongst several levels corresponding, respectively, to those of the shelves of the processing appliance, and means for transferring the trays (2) from the transfer platform (11) on to each level of the carriage and vice versa.

12. Installation according to claim 11, characterised in that the frame (12) of the transfer platform is extended, at its end facing towards the movable transfer carriage (5), by a coupling member (27a) of lesser width than that of the frame (12) and which carries rods (13) provided with rollers (14) and driven in rotation.

13. Installation according to one of the claims 11 and 12, characterised in that the loading and/or unloading gantry (4, 6) and the processing appliance comprises means for selective guidance and locking of the carriage (5).

**Patentansprüche**

1. Transportwagen für Platten (2) auf Etagengestellen einer Bearbeitungsvorrichtung (1), mit einem versetzbaren Gestell, welches Plattenstützen (43, 44) auf unterschiedlichen Etagen trägt, welche den Etagengestellen entsprechen, und mit Mitnahmemitteln (56) für das Längsversetzen der Platten auf ihren Stützen, dadurch gekennzeichnet, daß die Mitnahmemittel· Auswahlmittel (72) aufweisen zum gleichzeitigen Versetzen der Platten aller Etagen des Wagens (5) oder nur einiger unter ihnen.

2. Wagen nach Anspruch 1, dadurch gekennzeichnet, daß die Stützen (43, 44) durch horizontale Längsführungen (43) gebildet sind, an denen bewegliche Rahmen (44) für den Transport von Platten (2) angebracht sind.

3. Wagen nach Anspruch 2, dadurch gekennzeichnet, daß die Mitnahmemittel zwei seitliche, vertikale Flanken (56) aufweisen, die quer einander gegenüber angeordnet sind, miteinander verbunden sind und längs auf dem Wagengestell (5) gleiten können, Vorrichtungen (72) zur selektiven Kopplung zwischen diesen Flanken (56) und jedem der Rahmen (44) für den Plattentransport, und die Auswahlmittel bildend, und Mittel aufweisen für das Längsversetzen der zwei Flanken (56) und der Kopplungsvorrichtungen, die sie tragen, in den zwei Richtungen.

4. Wagen nach Anspruch 3, dadurch gekennzeichnet, daß jede Vertikalflanke (66) auf ihrer Außenseite einen Kopplungssteller (72) pro Etage trägt, wobei sich dieser Steller horizontal und quer nach außen in der Ebene der betrachteten Etage erstreckt und jeder Steller (72) die selektive Kopplung zwischen der vertikalen Flanke (56), die ihn trägt, und dem Rahmen (44) für den Transport der Platten (2) der Etage steuert, welcher er zugeordnet ist.

5. Wagen nach einem beliebigen der Ansprüche 2 bis 4, dadurch gekennzeichnet, daß jeder Plattentransportrahmen (44) eine Gabel mit zwei Schenkeln bildet, die mit den Führungen (43) des Wagens (5) zusammenwirken, wobei jede Führung einen vertikalen Flügel (43a) aufweist, der eine seitliche Führung für die bewegliche Gabel (44) und einen horizontalen Flügel (43b) bildet, der sich nach innen erstreckt und einen Rollweg für diese bewegliche Gabel (44) bildet.

6. Wagen nach Anspruch 5, dadurch gekennzeichnet, daß sich horizontale und Querstangen (45) zwischen den zwei horizontalen Flügeln (43b) der Führungen (43) erstrecken, wobei diese Stangen (45) Rollen (46) tragen, welche die Platten stützen können, und daß die horizontalen Flügeln (43b) auch längs ihrer Ränder in geeigneten Abständen Walzen (47) mit vertikalen Achsen tragen, welche die seitliche Führung der Platten sicherstellen.

7. Wagen nach einem der Ansprüche 5 und 6, dadurch gekennzeichnet, daß jeder Längsschenkel der beweglichen Gabel (44) zwei Elemente aufweist, nämlich eine untere verlängerte Stütze (48) in Form einer Stange, die auf dem horizontalen Flügel (43b) der Führungen (43) mittels Rollen (49) mit horizontalen und Querachsen rollt, und ein oberes Profil (51) mit dem Querschnitt in der Form eines umgekehrten U, welches gleitend vertikal bezüglich der unteren Stütze (48) angebracht ist, wobei der Innenflügel jedes Profils (51) an seinem unteren Ende durch eine Schiene (51a) verlängert ist, die sich nach innen erstreckt, d. h. zu den Platten (2) hin, und die dazu bestimmt ist, mit den äußeren horizontalen und Längsflügeln (2a) der Platten (2) zusammenzuwirken, um diese hochzuheben, und daß sich eine aufblasbare Verbindung (52) längs zwischen der unteren Stütze (48) und dem oberen Profil (51) auf der ganzen Länge derselben erstreckt, wobei diese Verbindung an ihrem vorderen Ende (52a) geschlossen ist und an ihrem hinteren Ende mit einer Quelle für Druckluft verbunden werden kann.

8. Wagen nach Anspruch 7, dadurch gekennzeichnet, daß jede untere Stütze (48) an ihrem vorderen Ende eine zusätzliche Rolle (47A) mit vertikaler Achse für die Führung an den Seitenflächen der Platten trägt.

9. Wagen nach einem der Ansprüche 7 und 8, dadurch gekennzeichnet, daß er einen kleinen Bogen (44A) aufweist, welcher einen Steg zwischen den vorderen Enden der zwei unteren Stützen (48) bildet.

10. Wagen nach den Ansprüchen 4 und 7 zusammen, dadurch gekennzeichnet, daß jeder Kopplungssteller (72) mit einer Platte (73) formschlüssig verbunden ist, die einen Mitnahmefinger (74) und ein Verbindungsstück (75) trägt, wobei sich diese zwei Elemente quer in Richtung einer hinteren Traverse (55) des Rahmens (44) für den Plattentransport (2) erstrecken, der Mitnahmefinger (74), der durch die Platte (73) getragen wird, bezüglich eines Loches oder einer Kerbe (76) angeordnet ist, das oder die am Ende dieser hinteren Traverse (55) vorgesehen ist, welche auch eine Öffnung (78) aufweist, welche mit der aufblasbaren Verbindung (52) des Transportrahmens (44) in Verbindung steht und gegenüber welchem dieses Verbindungsstück (75) sich befindet.

11. Lade- und Entladevorrichtung für einen Bearbeitungsapparat mit Mehrfachetagegestellen, dadurch gekennzeichnet, daß sie aufweist :

mindestens einen Förderer zum Zuführen und-/oder Entleeren von Platten (3, 7) ; einen Transportwagen (5) gemäß einem der Ansprüche 1 bis 10 ; und am Ende des oder jedes Förderers (3, 7) eine Belade- und/oder Entladebrücke (4, 6), die eine Transportplattform, die auf einem festen Gestell (8, 9) vertikal beweglich ist, Mittel (22-26) zur Steuerung des vertikalen Versetzens dieser Plattform (11) und Anhalten bei einem bestimmten Niveau unter mehreren Niveaus, die jeweils diesen der Etagengestellen der Bearbeitungsvorrichtung entsprechen, und Mittel zum Überführen der Platten (2) von der Transportplattform (1) auf jede Etage des Wagens und umgekehrt.

12. Vorrichtung nach Anspruch 11, dadurch gekennzeichnet, daß der Rahmen (12) der Transportplattform (11) an seinem Ende, welches zu dem beweglichen Transportwagen (5) hin gewendet ist, durch ein Kopplungsteil (27a) viel kleinerer Breite als die des Rahmens (5) verlängert ist und Stäbe (13) trägt, die mit Rollen (14) verbunden sind und in Drehung gebracht werden.

13. Vorrichtung nach einem der Ansprüche 11 und 12, dadurch gekennzeichnet, daß die Belade- und/oder Entladebrücke (4, 6) und die Bearbeitungsvorrichtung Mittel aufweisen für die Führung und das wahlweise Verbinden des Wagens (5).

Fig.1

Fig. 2

EP 0 219 520 B1

*Fig.3*

Fig.4

Fig. 5

Fig.6

Fig.7

EP 0 219 520 B1

Fig:8

Fig.9

Fig.10

Fig.11

Fig.12

Fig.13

Fig.14

*Fig.15*

*Fig.16*

*Fig.17*

EP 0 219 520 B1

Fig. 18

Fig. 19

Fig. 20

EP 0 219 520 B1